# EUROPEAN PATENT APPLICATION

(11) **EP 4 678 414 A1**
(43) Date of publication of application: **14.01.2026**
(21) Application number: 23926401.3
(22) Date of filing: 30.10.2023
(51) Int. Cl.: B60C 9/00, B60C 9/18, B60C 9/20, B60C 9/22, D07B 1/06

(54) **PNEUMATIC TIRE**

(30) Priority: 06.03.2023 JP 2023034087
(71) Applicant: BRIDGESTONE CORPORATION, Chuo-ku Tokyo 104-8340 (JP)
(72) Inventor: KOCHI, Naoto, Tokyo 104-8340 (JP)
(74) Representative: Marks & Clerk LLP
(86) International application number: PCT/JP2023/039131
(87) International publication number: WO 2024/185193

(57) **Abstract**

A pneumatic tire according to the present disclosure is a pneumatic tire including five belt layers in total. The five belt layers include: two inclined belt layers including inclined belt cords, a circumferential belt layer including circumferential belt cords, a protective belt layer including protective belt cords extending at an inclination angle greater than that of the inclined belt cords with respect to the tire circumferential direction, and a base belt layer including base belt cords extending at an inclination angle greater than that of the inclined belt cords with respect to the tire circumferential direction. An elastic modulus at 1.0% strain of the circumferential belt cords is 30 GPa to 80 GPa.

## Description

### TECHNICAL FIELD

The present disclosure relates to a pneumatic tire.

### BACKGROUND

It has been proposed to dispose a circumferential belt layer in order to suppress the radial growth of a pneumatic tire. Patent Literature (PTL) 1 describes a pneumatic tire of this type.

### CITATION LIST

### Patent Literature

PTL 1: JP 2009-196548 A

### SUMMARY

### (Technical Problem)

By providing a circumferential belt layer, it is possible to suppress the radial growth of the tire when filled with the prescribed internal pressure. However, in the tire width direction, a large difference in circumferential rigidity arises between regions where the circumferential belt layer is present and regions where the circumferential belt layer is absent. Therefore, when the end portion in the tire width direction of the ground contact region is a region where the circumferential belt layer is absent, uneven wear due to local radial growth is likely to occur at the end portion in the tire width direction of the ground contact region during tire running.

In addition, at the end portion in the tire width direction of the ground contact region, deformation is also likely to occur in the tire width direction. Therefore, at the end portion in the tire width direction of the ground contact region, there is concern about an increase in rolling resistance due to deformation in the tire width direction, as well as uneven wear due to deformation in the tire width direction.

An object of the present disclosure is to provide a pneumatic tire capable of suppressing uneven wear due to local radial growth and deformation in the tire width direction at the end portion in the tire width direction of the ground contact region, as well as suppressing an increase in rolling resistance due to deformation in the tire width direction.

### (Solution to Problem)

A pneumatic tire according to a first aspect of the present disclosure is
(1)
   a pneumatic tire including five belt layers in total,
   wherein the five belt layers comprise:
   two inclined belt layers including inclined belt cords extending at an inclination angle greater than 5° with respect to the tire circumferential direction and inclined in opposite directions to each other;
   a circumferential belt layer including circumferential belt cords extending in a direction of 0° to 5° with respect to the tire circumferential direction, and disposed adjacent in the tire radial direction to at least one of the two inclined belt layers;
   a protective belt layer disposed on the outer side in the tire radial direction with respect to the two inclined belt layers and the circumferential belt layer, the protective belt layer including protective belt cords extending at an inclination angle greater than that of the inclined belt cords with respect to the tire circumferential direction;
   and a base belt layer disposed on the inner side in the tire radial direction with respect to the two inclined belt layers and the circumferential belt layer, the base belt layer including base belt cords extending at an inclination angle greater than that of the inclined belt cords with respect to the tire circumferential direction,
   wherein an elastic modulus at 1.0% strain of the circumferential belt cords is 30 GPa to 80 GPa.
   A pneumatic tire according to one embodiment of the present disclosure is
(2) the pneumatic tire according to the above (1), wherein a width in the tire width direction of the base belt layer is less than 50% of a width in the tire width direction of the circumferential belt layer.
   A pneumatic tire according to one embodiment of the present disclosure is
(3) the pneumatic tire according to the above (1) or (2), wherein the protective belt cords of the protective belt layer and the base belt cords of the base belt layer are inclined in opposite directions to each other with respect to the tire circumferential direction.
   A pneumatic tire according to one embodiment of the present disclosure is
(4) the pneumatic tire according to the above (3), wherein the inclination angle with respect to the tire circumferential direction of the protective belt cords of the protective belt layer and the inclination angle with respect to the tire circumferential direction of the base belt cords of the base belt layer are substantially equal.
   A pneumatic tire according to one embodiment of the present disclosure is
(5) the pneumatic tire according to the above (3) or (4), wherein the base belt cords of the base belt layer and the inclined belt cords of the inclined belt layer located on the inner side in the tire radial direction among the two inclined belt layers are each inclined in the same direction with respect to the tire circumferential direction.
   A pneumatic tire according to one embodiment of the present disclosure is
(6) the pneumatic tire according to any one of the above (3) to (5), wherein the protective belt cords of the protective belt layer and the inclined belt cords of the inclined belt layer located on the outer side in the tire radial direction among the two inclined belt layers are each inclined in the same direction with respect to the tire circumferential direction.
   A pneumatic tire according to one embodiment of the present disclosure is
(7) the pneumatic tire according to any one of the above (1) to (6), wherein the inclined belt cords of each of the two inclined belt layers are inclined at an inclination angle of 15° to 50° with respect to the tire circumferential direction.
   A pneumatic tire according to one embodiment of the present disclosure is
(8) the pneumatic tire according to any one of the above (1) to (7), wherein a width in the tire width direction of the circumferential belt layer is narrower than the maximum width in the tire width direction of the two inclined belt layers.
   A pneumatic tire according to one embodiment of the present disclosure is
(9) the pneumatic tire according to any one of the above (1) to (8), wherein a ratio E1/E2 of an elastic modulus E1 at 1.0% strain to an elastic modulus E2 at 0.25% strain of the circumferential belt cords is 1.1 to 3.0.
   A pneumatic tire according to one embodiment of the present disclosure is
(10) the pneumatic tire according to any one of the above (1) to (9), wherein an elastic modulus E2 at 0.25% strain of the circumferential belt cords is 15 GPa to 60 GPa.
   A pneumatic tire according to one embodiment of the present disclosure is
(11) the pneumatic tire according to any one of the above (1) to (10), wherein the circumferential belt cords have a multiple-twisted structure in which strands formed by twisting a plurality of filaments are further twisted together.

### (Advantageous Effect)

According to the present disclosure, it is possible to provide a pneumatic tire capable of suppressing uneven wear due to local radial growth and deformation in the tire width direction at the end portion in the tire width direction of the ground contact region, as well as suppressing an increase in rolling resistance due to deformation in the tire width direction.

### BRIEF DESCRIPTION OF THE DRAWINGS

In the accompanying drawings:
FIG. 1: A cross-sectional view in the tire width direction of a tire according to one embodiment of the present disclosure;
FIG. 2: A diagram illustrating the configuration of the belt of the tire depicted in FIG. 1;
FIG. 3: A diagram illustrating an example of the S-S curve (load-strain curve) of the extracted cord of the circumferential belt cords in the circumferential belt layer of the tire depicted in FIG. 1;
FIG. 4: A cross-sectional view of the raw cord of the circumferential belt cords in the circumferential belt layer of the tire depicted in FIG. 1; and
FIG. 5: A diagram illustrating a modified example of the tire depicted in FIG. 1.

### DETAILED DESCRIPTION

Hereinafter, embodiments of a pneumatic tire according to the present disclosure will be illustratively described with reference to the drawings. In each drawing, identical components are denoted by the same reference numerals. In this specification, the "tire width direction" refers to the direction parallel to the central axis of the tire. The "tire radial direction" refers to the direction perpendicular to the central axis of the tire, i.e., the radial direction centered on the central axis. The "tire circumferential direction" refers to the direction in which the tire rotates about its central axis.

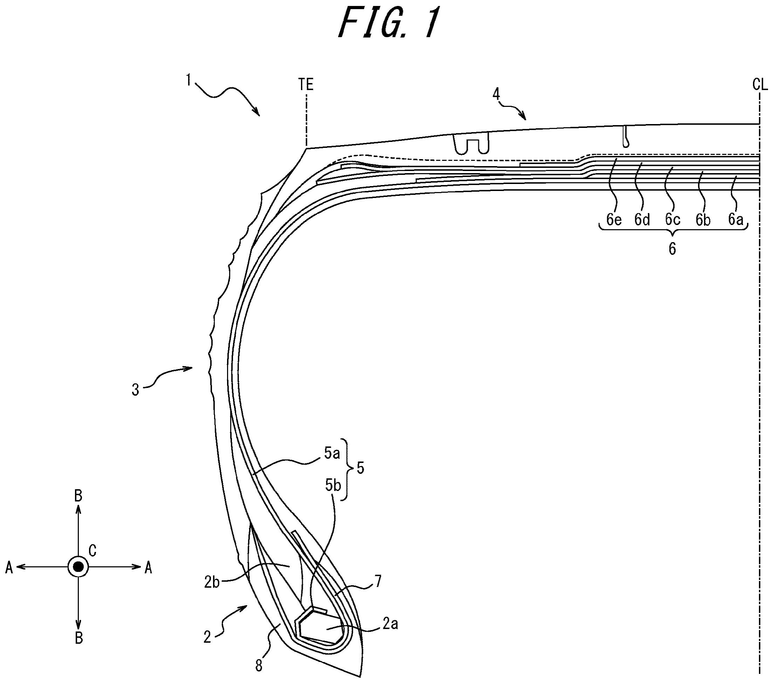

FIG. 1 illustrates a cross-section in the tire width direction of a pneumatic tire 1 (hereinafter simply referred to as "tire 1") as one embodiment of the present disclosure. The cross-section in the tire width direction of tire 1 refers to a cross-section of tire 1 in a plane passing through the central axis of the tire and parallel to the central axis. Since tire 1 is configured symmetrically with respect to the tire equatorial plane CL, FIG. 1 depicts only one side of the tire width direction A across the tire equatorial plane CL.

As illustrated in FIG. 1, tire 1 of the present embodiment includes a pair of bead portions 2, a pair of sidewall portions 3 each connected to a respective bead portion 2, and a tread portion 4 connected to the pair of sidewall portions 3. Further, tire 1 includes a carcass 5 extending in a toroidal shape between the pair of bead portions 2, and a belt 6 disposed on the outer side in the tire radial direction B of the crown portion of the carcass 5.

In the present embodiment, each of the pair of bead portions 2 has a bead core 2a embedded therein, and a bead filler 2b is disposed on the outer side in the tire radial direction B of the bead core 2a.

Further, in the present embodiment, the carcass 5 is composed of one or more carcass plies. The carcass 5 includes a carcass main body portion 5a extending in a toroidal shape between the pair of bead portions 2, and a carcass wound portion 5b extending from the carcass main body portion 5a and wound around the bead core 2a. In addition, in the present embodiment, a wire chafer 7 is disposed around the bead core 2a and on the outer periphery of the carcass wound portion 5b. Further, in the present embodiment, a rubber chafer 8 is disposed so as to cover the wire chafer 7.

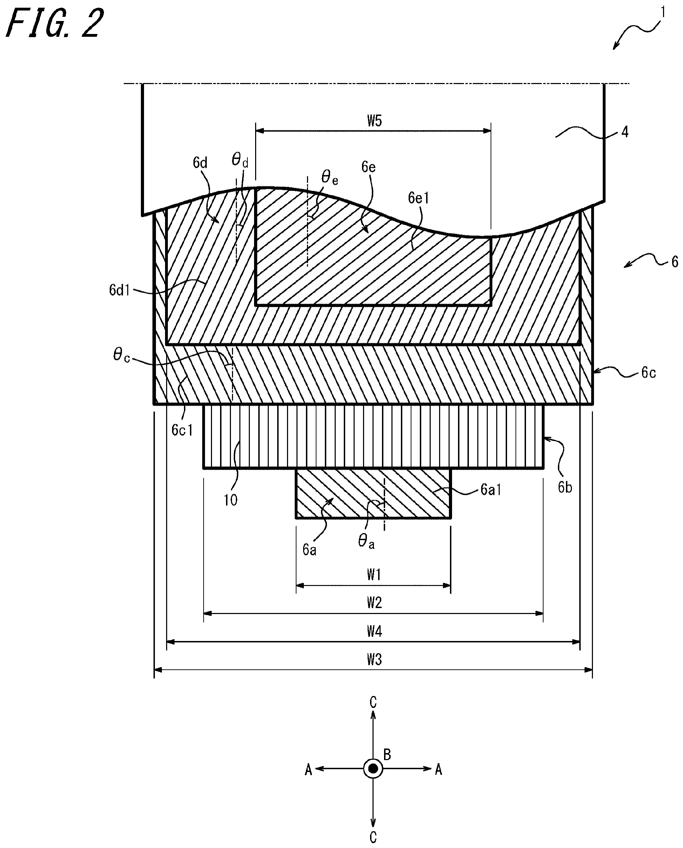

As illustrated in FIG. 1, the belt 6 of the present embodiment is composed of five belt layers. Specifically, the five belt layers are a base belt layer 6a, a circumferential belt layer 6b, two inclined belt layers 6c and 6d, and a protective belt layer 6e. FIG. 2 is a diagram depicting the configuration of the five belt layers of belt 6.

As illustrated in FIG. 2, the base belt layer 6a is disposed on the inner side in the tire radial direction B with respect to the two inclined belt layers 6c, 6d and the circumferential belt layer 6b. The base belt layer 6a includes base belt cords 6a1 extending in a direction inclined with respect to the tire circumferential direction C. The base belt cords 6a1 of the present embodiment are steel cords. More specifically, the base belt layer 6a of the present embodiment is a rubberized layer in which a plurality of base belt cords 6a1 arranged in parallel are covered with coating rubber. Further, the base belt cords 6a1 extend at an inclination angle θa with respect to the tire circumferential direction C, which is greater than the inclination angles of the inclined belt cords 6c1, 6d1. That is, the acute inclination angle θa of the base belt cords 6al with respect to the tire circumferential direction C is greater than the acute inclination angles θc, θd of the inclined belt cords 6c1, 6d1 with respect to the tire circumferential direction C. The base belt cords 6a1 of the present embodiment extend at an inclination angle θa of approximately 50° with respect to the tire circumferential direction C.

As illustrated in FIG. 2, the circumferential belt layer 6b includes circumferential belt cords 10 extending in a direction of 0° to 5° (in the present embodiment, 0°, i.e., a direction parallel to the tire circumferential direction C) with respect to the tire circumferential direction C. The circumferential belt cords 10 of the present embodiment are steel cords. More specifically, the circumferential belt layer 6b of the present embodiment is a rubberized layer in which a plurality of circumferential belt cords 10 arranged in the tire width direction A are covered with coating rubber.

As illustrated in FIG. 2, the two inclined belt layers 6c and 6d include inclined belt cords 6c1 and 6d1 extending in opposite directions at inclination angles θc and θd (in the present embodiment, 15° to 50°) greater than 5° with respect to the tire circumferential direction C. The inclined belt cords 6c1 and 6d1 of the present embodiment are steel cords. More specifically, the inclined belt layer 6c of the present embodiment is a rubberized layer in which a plurality of inclined belt cords 6c1 arranged in parallel are covered with coating rubber. Similarly, the inclined belt layer 6d of the present embodiment is a rubberized layer in which a plurality of inclined belt cords 6d1 arranged in parallel are covered with coating rubber.

As illustrated in FIG. 2, the protective belt layer 6e is disposed on the outer side in the tire radial direction B with respect to the two inclined belt layers 6c, 6d and the circumferential belt layer 6b. The protective belt layer 6e includes protective belt cords 6e1 extending in a direction inclined with respect to the tire circumferential direction C. The protective belt cords 6e1 of the present embodiment are steel cords. More specifically, the protective belt layer 6e of the present embodiment is a rubberized layer in which a plurality of protective belt cords 6e1 arranged in parallel are covered with coating rubber. Further, the protective belt cords 6e1 extend at an inclination angle θe with respect to the tire circumferential direction C, which is greater than the inclination angles of the inclined belt cords 6c1, 6d1. That is, the acute inclination angle θe of the protective belt cords 6e1 with respect to the tire circumferential direction C is greater than the acute inclination angles θc, θd of the inclined belt cords 6c1, 6d1 with respect to the tire circumferential direction C. The protective belt cords 6el of the present embodiment extend at an inclination angle θe of approximately 50° with respect to the tire circumferential direction C.

As illustrated in FIG. 2, in the present embodiment, in the same half portion in the tire width direction A across the tire equatorial plane CL, the inclined belt cords 6d1 of the one inclined belt layer 6d located on the outer side in the tire radial direction B and the protective belt cords 6e1 of the protective belt layer 6e both extend in the same direction in the tire circumferential direction from the inner side to the outer side in the tire width direction A. Further, in the present embodiment, the base belt cords 6al of the base belt layer 6a and the protective belt cords 6e1 of the protective belt layer 6e extend in opposite directions with respect to the tire circumferential direction C. Furthermore, in the present embodiment, the inclination angle θa of the base belt cords 6a1 with respect to the tire circumferential direction C and the inclination angle θe of the protective belt cords 6e1 with respect to the tire circumferential direction C are substantially equal.

As illustrated in FIG. 1, in the present embodiment, from the inner side to the outer side in the tire radial direction B, the base belt layer 6a, circumferential belt layer 6b, inclined belt layer 6c, inclined belt layer 6d, and protective belt layer 6e are arranged in this order. That is, in the present embodiment, the circumferential belt layer 6b is disposed adjacent to the inner side in the tire radial direction B of the two inclined belt layers 6c, 6d, i.e., without any other belt layer interposed on the inner side in the tire radial direction B of the two inclined belt layers 6c, 6d. Note that although the circumferential belt layer 6b of the present embodiment is adjacent to the inner side in the tire radial direction B of the two inclined belt layers 6c, 6d, this configuration is not limiting. The circumferential belt layer 6b may be disposed adjacent to the outer side in the tire radial direction B of the two inclined belt layers 6c, 6d. Alternatively, the circumferential belt layer 6b may be disposed between the two inclined belt layers 6c, 6d, adjacent to each of the two inclined belt layers 6c, 6d. That is, the circumferential belt layer 6b may be disposed adjacent to at least one of the two inclined belt layers 6c, 6d on the inner or outer side in the tire radial direction B.

In the present embodiment, the widths in the tire width direction A of the five belt layers, in descending order, are: the width W3 of the inclined belt layer 6c, the width W4 of the inclined belt layer 6d, the width W2 of the circumferential belt layer 6b, the width W5 of the protective belt layer 6e, and the width W1 of the base belt layer 6a, but this configuration is not limiting. However, as illustrated in FIG. 2, it is preferable that the width W2 in the tire width direction A of the circumferential belt layer 6b is narrower than the maximum width (in the present embodiment, the width W3 of the inclined belt layer 6c) among the widths W3, W4 in the tire width direction A of the two inclined belt layers 6c, 6d. Details will be described later.

Further, as illustrated in FIGS. 1 and 2, the two inclined belt layers 6c, 6d extend beyond the circumferential belt layer 6b to the outer side in the tire width direction A on both sides in the tire width direction A. Furthermore, one inclined belt layer 6c extends beyond the other inclined belt layer 6d to the outer side in the tire width direction A on both sides in the tire width direction A. Additionally, the circumferential belt layer 6b extends beyond the base belt layer 6a and the protective belt layer 6e to the outer side in the tire width direction A on both sides in the tire width direction A. The protective belt layer 6e also extends beyond the base belt layer 6a to the outer side in the tire width direction A on both sides in the tire width direction A.

Although not particularly limited, the tire 1 of the present embodiment can be suitably used as a heavy-duty tire, such as a truck or bus tire.

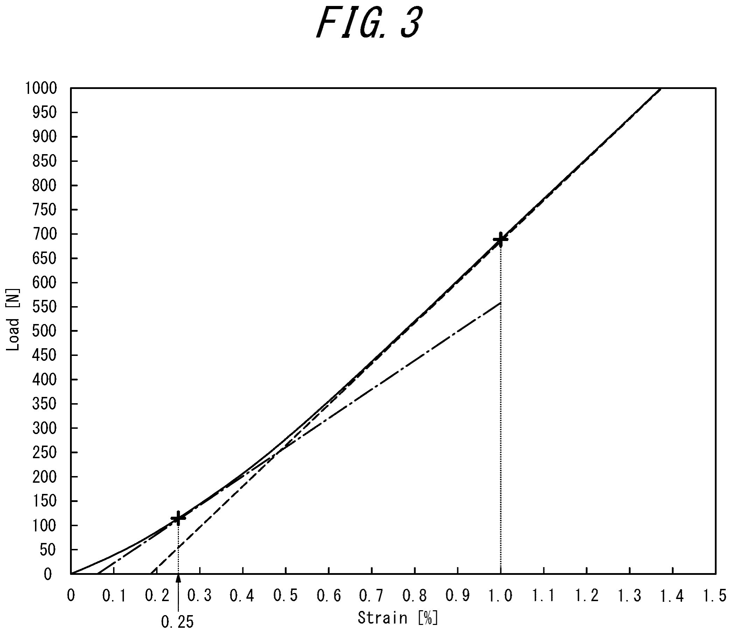

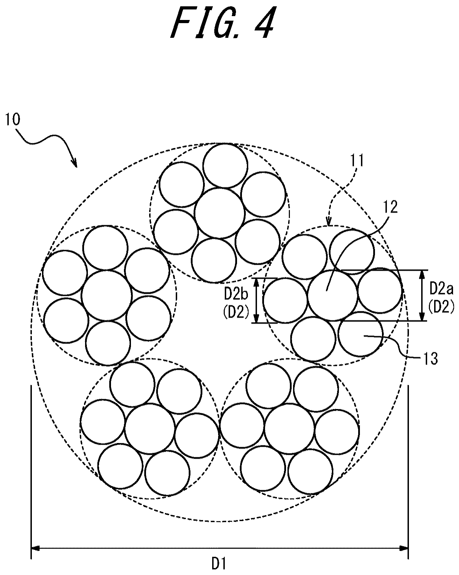

The elastic modulus E1 at 1.0% strain (tensile strain) of the circumferential belt cords 10 is 30 GPa to 80 GPa. The elastic modulus of the circumferential belt cords 10 is a value measured using extracted cords of the circumferential belt cords 10. "Extracted cord" refers to a cord with rubber attached, extracted by dissecting a vulcanized tire 1. FIG. 3 is a diagram illustrating an example of the S-S curve (load-strain curve) of an extracted cord of a tire steel cord as the circumferential belt cord 10. In FIG. 3, the two-dot chain line is the tangent at 1.0% strain in the high-strain region (region where strain is greater than 0.7%). The elastic modulus E1 at 1.0% strain of the circumferential belt cords 10 is the value obtained by dividing the slope of the two-dot chain line illustrated in FIG. 3 by the cross-sectional area of the circumferential belt cords 10. As will be described in detail later, the circumferential belt cords 10 of the present embodiment are composed of core filaments 12 and sheath filaments 13 (see FIG. 4). In such a case, the elastic modulus E1 at 1.0% strain of the circumferential belt cords 10 refers to the value obtained by dividing the slope of the two-dot chain line illustrated in FIG. 3 by the total cross-sectional area of the filaments 12, 13 constituting the circumferential belt cords 10.

By setting the elastic modulus E1 at 1.0% strain of the circumferential belt cords 10 to 30 GPa or more, the radial growth of tire 1 when filled with the prescribed internal pressure can be effectively suppressed. Further, by setting the elastic modulus E1 at 1.0% strain of the circumferential belt cords 10 to 80 GPa or less, the tensile stress applied to the circumferential belt cords 10 can be reduced, and the rigidity in the tire circumferential direction C of the circumferential belt layer 6b can be lowered. As a result, in the tread portion 4, it is possible to suppress an increase in the difference in rigidity in the tire circumferential direction C between the region in the tire width direction A where the circumferential belt layer 6b is present and the region in the tire width direction A where the circumferential belt layer 6b is not present. Therefore, even if the end portion in the tire width direction A of the ground contact region during tire running is a region where the circumferential belt layer 6b is not present, it is possible to suppress the occurrence of uneven wear at the end portion in the tire width direction A of the ground contact region due to radial growth.

Furthermore, by setting the elastic modulus E1 at 1.0% strain of the circumferential belt cords 10 to 80 GPa or less, the tensile stress applied to the circumferential belt cords 10 at the end portion in the tire width direction A of the circumferential belt layer 6b can be reduced, and breakage of the circumferential belt cords 10 can be suppressed.

For the same reasons as described above, it is more preferable that the elastic modulus E1 at 1.0% strain of the circumferential belt cords 10 is 40 GPa to 70 GPa.

Furthermore, as illustrated in FIGS. 1 and 2, all five belt layers as the belt 6 include only one circumferential belt layer 6b. By doing so, compared to a configuration in which a plurality of circumferential belt layers 6b are provided, the rigidity in the tire circumferential direction C of the circumferential belt layer 6b can be reduced. As a result, in the tread portion 4, it is possible to further suppress an increase in the difference in rigidity in the tire circumferential direction C between the region in the tire width direction A where the circumferential belt layer 6b is present and the region in the tire width direction A where the circumferential belt layer 6b is not present. Therefore, even if the end portion in the tire width direction A of the ground contact region during tire running is a region where the circumferential belt layer 6b is not present, it is possible to further suppress the occurrence of uneven wear at the end portion in the tire width direction A of the ground contact region due to radial growth.

Further, as described above, all five belt layers as the belt 6 include a protective belt layer 6e disposed on the outer side in the tire radial direction B with respect to the two inclined belt layers 6c, 6d and the circumferential belt layer 6b, and a base belt layer 6a disposed on the inner side in the tire radial direction B with respect to the two inclined belt layers 6c, 6d and the circumferential belt layer 6b. The protective belt cords 6e1 of the protective belt layer 6e and the base belt cords 6a1 of the base belt layer 6a extend at inclination angles θa, θe with respect to the tire circumferential direction C, which are greater than the inclination angles of the inclined belt cords 6c1, 6d1. By providing such a base belt layer 6a and protective belt layer 6e, the rigidity in the tire width direction A of the tread portion 4 can be increased by the base belt cords 6a1 and the protective belt cords 6e1. As a result, deformation in the tire width direction A at the end portion in the tire width direction A of the ground contact region during tire running can be suppressed, and uneven wear due to deformation in the tire width direction A at the end portion of the ground contact region can be suppressed. Further, by making the inclination of the protective belt cords 6e1 and the base belt cords 6a1 greater than that of the inclined belt cords 6c1, 6d1, the rigidity in the tire width direction A of the base belt layer 6a and the protective belt layer 6e can be increased compared to a configuration with a smaller inclination, and deformation in the tire width direction A at the end portion in the tire width direction A of the ground contact region can be suppressed. As a result, interlayer strain between the base belt layer 6a and the protective belt layer 6e can be suppressed, and an increase in rolling resistance can be prevented.

That is, according to tire 1, by the following (Configuration I), (Configuration II), and (Configuration III), it is possible to suppress uneven wear due to local radial growth and deformation in the tire width direction A at the end portion in the tire width direction A of the ground contact region, and to suppress an increase in rolling resistance due to deformation in the tire width direction A at the end portion in the tire width direction A of the ground contact region.

### (Configuration I)

The elastic modulus E1 at 1.0% strain (tensile strain) of the circumferential belt cords 10 is 30 GPa to 80 GPa.

### (Configuration II)

All five belt layers include only one circumferential belt layer 6b.

### (Configuration III)

All five belt layers include a protective belt layer 6e disposed on the outer side in the tire radial direction B with respect to the two inclined belt layers 6c, 6d and the circumferential belt layer 6b, and a base belt layer 6a disposed on the inner side in the tire radial direction B with respect to the two inclined belt layers 6c, 6d and the circumferential belt layer 6b, and the protective belt cords 6e1 and the base belt cords 6a1 extend at inclination angles θa, θe with respect to the tire circumferential direction C, which are greater than the inclination angles of the inclined belt cords 6c1, 6d1.

As will be described later, it is preferable that the inclination angles θc, θd of the inclined belt cords 6c1, 6d1 of the inclined belt layers 6c, 6d with respect to the tire circumferential direction C are 15° to 50°, and particularly preferably 15° to 45°. In contrast, it is preferable that the inclination angles θa, θe of the base belt cords 6a1 of the base belt layer 6a and the protective belt cords 6e1 of the protective belt layer 6e with respect to the tire circumferential direction C are greater than 45°.

Further, it is preferable that the width W1 in the tire width direction A of the base belt layer 6a is less than 50% of the width W2 in the tire width direction A of the circumferential belt layer 6b. By doing so, while ensuring the effects of the above-described Configuration (III), the width W1 in the tire width direction A of the base belt layer 6a becomes narrower, thereby enabling weight reduction of tire 1, and thus further reducing rolling resistance. From the viewpoint of improving the effects of the above-described Configuration (III), it is preferable that the width W1 of the base belt layer 6a is at least 20% of the width W2 of the circumferential belt layer 6b.

Furthermore, as illustrated in FIG. 2, in the present embodiment, the protective belt cords 6e1 of the protective belt layer 6e and the base belt cords 6a1 of the base belt layer 6a are inclined in opposite directions with respect to the tire circumferential direction C. By doing so, the variation in rigidity in both directions of the tire width direction A of the tread portion 4 can be suppressed by the base belt cords 6a1 and the protective belt cords 6e1. As a result, variation in interlayer strain in both directions of the tire width direction A of the base belt layer 6a and the protective belt layer 6e can be suppressed. Therefore, variation in deformation in the tire width direction A at both end portions in the tire width direction A of the ground contact region during tire running can be suppressed. Consequently, it is possible to suppress the occurrence of variation in the amount of uneven wear at both end portions in the tire width direction A of the ground contact region.

In the present embodiment, the inclination angle θe of the protective belt cords 6e1 of the protective belt layer 6e with respect to the tire circumferential direction C, and the inclination angle θa of the base belt cords 6a1 of the base belt layer 6a with respect to the tire circumferential direction C, are substantially equal. In the present embodiment, both inclination angles θa and θe are set to approximately 50°. By doing so, it is possible to further suppress variation in interlayer strain in both directions of the tire width direction A between the base belt layer 6a and the protective belt layer 6e. As a result, it is possible to suppress damage caused by local concentration of strain and to improve the durability of the belt 6.

Further, as illustrated in FIG. 2, in the present embodiment, the base belt cords 6al of the base belt layer 6a and the inclined belt cords 6c1 of the inclined belt layer 6c, which is located on the inner side in the tire radial direction B among the two inclined belt layers 6c and 6d, are inclined in the same direction with respect to the tire circumferential direction C. More specifically, in the present embodiment, the base belt cords 6a1 and the inclined belt cords 6c1 extend from the upper left to the lower right in FIG. 2. In this way, by making the direction of inclination of the base belt cords 6a1 and the inclined belt cords 6c1 with respect to the tire circumferential direction C the same, it is possible to suppress interlayer strain between the base belt layer 6a and the inclined belt layer 6c, as compared to the case where the directions of inclination are opposite. As a result, hysteresis loss can be reduced, and the rolling resistance of the tire 1 can be further suppressed.

Furthermore, as illustrated in FIG. 2, in the present embodiment, the protective belt cords 6e1 of the protective belt layer 6e and the inclined belt cords 6d1 of the inclined belt layer 6d, which is located on the outer side in the tire radial direction B among the two inclined belt layers 6c and 6d, are inclined in the same direction with respect to the tire circumferential direction C. More specifically, in the present embodiment, the protective belt cords 6e1 and the inclined belt cords 6d1 extend from the upper right to the lower left in FIG. 2. In this way, by making the direction of inclination of the protective belt cords 6el and the inclined belt cords 6d1 with respect to the tire circumferential direction C the same, it is possible to suppress interlayer strain between the protective belt layer 6e and the inclined belt layer 6d, as compared to the case where the directions of inclination are opposite. As a result, hysteresis loss can be reduced, and the rolling resistance of the tire 1 can be further suppressed.

Further, as illustrated in FIG. 2, in the tire 1 of the present embodiment, the inclined belt cords 6c1 and 6d1 of each of the two inclined belt layers 6c and 6d extend at inclination angles θc and θd of 15° to 50° with respect to the tire circumferential direction C. By setting the inclination angles θc and θd of the inclined belt cords 6c1 and 6d1 of the inclined belt layers 6c and 6d with respect to the tire circumferential direction C to 15° or more, it is possible to suppress the tension load in the tire circumferential direction C of the inclined belt cords 6c1 and 6d1, and to suppress the occurrence of failure of the inclined belt layers 6c and 6d due to concentration of strain in the tire circumferential direction C at the ends in the tire width direction A of the inclined belt layers 6c and 6d. Further, by setting the inclination angles θc and θd of the inclined belt cords 6c1 and 6d1 of the inclined belt layers 6c and 6d with respect to the tire circumferential direction C to 50° or less, it is possible to suppress the difference in rigidity in the tire circumferential direction C between a region in the tire width direction A (hereinafter referred to as the "overlap region") where the circumferential belt layer 6b and the inclined belt layers 6c and 6d overlap in the tire radial direction B, and a region in the tire width direction A (hereinafter referred to as the "non-overlap region") where the circumferential belt layer 6b and the inclined belt layers 6c and 6d do not overlap in the tire radial direction B. Therefore, even when the ground contact region includes a non-overlap region, it is possible to further suppress uneven wear in the non-overlap region of the ground contact region.

Further, as illustrated in FIG. 2, in the present embodiment, the width W2 in the tire width direction A of the circumferential belt layer 6b is narrower than the maximum width in the tire width direction A of the two inclined belt layers 6c and 6d (in the present embodiment, the width W3 of the inclined belt layer 6c). With such a configuration, a difference in rigidity in the tire circumferential direction C is likely to occur between the overlap region and the non-overlap region, and uneven wear due to radial growth is likely to occur in the non-overlap region of the ground contact region. However, in the tire 1, by adopting the above-described configuration (I) and configuration (II), the rigidity in the tire circumferential direction C in the overlap region is reduced, so that uneven wear in the non-overlap region of the ground contact region can be suppressed.

Furthermore, it is preferable that the elastic modulus E2 at 0.25% strain (tensile strain) of the circumferential belt cords 10 is 15 GPa to 60 GPa. In FIG. 3, the one-dot chain line is a tangent at 0.25% strain, which is in a low strain region (a region where the strain is less than 0.3%). The elastic modulus E2 at 0.25% strain of the circumferential belt cords 10 is a value obtained by dividing the slope of the one-dot chain line illustrated in FIG. 3 by the cross-sectional area of the circumferential belt cords 10. Although details will be described later, the circumferential belt cords 10 of the present embodiment are composed of core filaments 12 and sheath filaments 13 (see FIG. 4). In such a case, the elastic modulus E2 at 0.25% strain of the circumferential belt cords 10 means a value obtained by dividing the slope of the one-dot chain line illustrated in FIG. 3 by the total cross-sectional area of the filaments 12 and 13 constituting the circumferential belt cords 10.

By setting the elastic modulus E2 at 0.25% strain of the circumferential belt cords 10 to 15 GPa or more, it is possible to effectively suppress the radial growth of the tire 1 when filled with the prescribed internal pressure. On the other hand, by setting the elastic modulus E2 at 0.25% strain of the circumferential belt cords 10 to 60 GPa or less, the elastic modulus E1 at 1.0% strain of the circumferential belt cords 10 is likely to fall within a desired range (30 GPa to 80 GPa). For the same reason, it is more preferable that the elastic modulus E2 at 0.25% strain of the circumferential belt cords 10 is 25 GPa to 60 GPa.

The ratio E1/E2 of the elastic modulus E1 at 1.0% strain of the circumferential belt cords 10 to the elastic modulus E2 at 0.25% strain of the circumferential belt cords 10 is preferably 1.1 to 3.0. By setting the ratio E1/E2 to 1.1 or more, the elastic modulus E2 can be made appropriately large relative to the elastic modulus E1, thereby effectively suppressing the radial growth of the tire 1 when filled with the prescribed internal pressure. On the other hand, by setting the ratio E1/E2 to 3.0 or less, the elastic modulus E1 can be made appropriately small relative to the elastic modulus E2, thereby reducing the rigidity step between the circumferential belt layer 6b and the inclined belt layers 6c and 6d, reducing strain in the region, and suppressing breakage of the circumferential belt cords 10. For the same reason, it is more preferable that the above ratio E1/E2 is 1.1 to 2.5.

FIG. 4 is a cross-sectional view of the circumferential belt cords 10 of the circumferential belt layer 6b of the present embodiment. More specifically, FIG. 4 illustrates a cross section of the circumferential belt cords 10 orthogonal to the extending direction of the circumferential belt cords 10. In FIG. 4, a cross section of the green cord, not the extracted cord, of the circumferential belt cords 10 is illustrated. That is, in FIG. 4, the circumferential belt cords 10 in which rubber is not adhered between the plurality of strands 11 and between the plurality of filaments 12 and 13 are illustrated. The circumferential belt cords 10 of the present embodiment are steel cords. As illustrated in FIG. 4, the circumferential belt cords 10 of the present embodiment do not have a core strand and are composed of a plurality of sheath strands 11. Each sheath strand 11 is a so-called "1+N structure" in which N sheath filaments 13 (six in the present embodiment) are arranged around one core filament 12. N is preferably an integer of 4 to 7. In this way, the circumferential belt cords 10 of the present embodiment have a multiple-twisted structure in which a plurality of strands (five in the present embodiment), each formed by twisting a plurality of filaments (one core filament 12 and six sheath filaments 13 in the present embodiment), are further twisted together. The number of strands is preferably 3 to 5. By setting the number of strands to three or more, as described later, it is possible to ensure the strength of the circumferential belt layer 6b even if the filament diameter is made relatively small, and on the other hand, by setting the number of strands to five or less, it is possible to suppress the occurrence of strand drop and stabilize the twisting characteristics. Further, by setting the number of core filaments 12 to one, it is possible to suppress the occurrence of twisting defects caused by the difference in the amount of twisting shrinkage between the core filament 12 and the sheath filaments 13. Further, by setting the number of sheath filaments 13 to four or more, it is possible to stabilize the twisting shape so that the gap between the plurality of sheath filaments 13 does not become large, and on the other hand, by setting the number of sheath filaments 13 to seven or less, it is possible to ensure a sufficient gap for rubber to penetrate. Further, by not providing a core strand, the space at the center of the circumferential belt cords 10 is filled with rubber, so that the tightening stress between the strands is dispersed, and premature breakage of the sheath filaments 13, which are the contact portions, is suppressed, resulting in good steel cord strength. It is preferable that the twisting direction of the strands and the twisting direction of the cord are the same.

In the present embodiment, for all filaments (the core filament 12 and the sheath filaments 13 in the present embodiment), the ratio D2/D1 of the filament diameter D2 to the cord diameter D1 is 0.13 or less. By setting the ratio D2/D1 to 0.13 or less, the filament diameter D2 does not become excessively large relative to the cord diameter D1, and breakage of the filaments due to bending deformation of the filaments caused by tension of the circumferential belt cords 10 is less likely to occur. From this viewpoint, it is more preferable that the ratio D2/D1 is 0.11 or less. On the other hand, if the filament diameter D2 is too small, sufficient cord strength cannot be obtained, so it is preferable that the ratio D2/D1 is 0.09 or more.

The cord diameter D1 of the circumferential belt cords 10 of the present embodiment is preferably 1.5 mm to 2.2 mm. By setting the cord diameter D1 to 1.5 mm or more, it is possible to ensure the strength of the circumferential belt layer 6b. Further, by setting the cord diameter D1 to 2.2 mm or less, it is possible to reduce the weight of the tire 1.

The filament diameter D2 of the filaments (the core filament 12 and the sheath filaments 13 in the present embodiment) is preferably 0.3 mm or less, and more preferably 0.25 mm or less. By setting the filament diameter D2 to 0.3 mm or less, it is possible to suppress breakage of the filaments due to bending deformation of the filaments caused by tension of the circumferential belt cords 10. On the other hand, if the filament diameter D2 is too small, sufficient cord strength cannot be obtained, so it is preferable that the filament diameter D2 is 0.15 mm or more.

In the present embodiment, the ratio D2a/D2b of the filament diameter D2a of the core filament 12 to the filament diameter D2b of the sheath filaments 13 is preferably 1.10 to 1.16. By setting the ratio D2a/D2b to 1.16 or less, it is possible to make the twisting characteristics of the circumferential belt cords 10 uniform by preventing uneven arrangement of the sheath filaments 13. Further, by setting the ratio D2a/D2b to 1.10 or more, it is possible to ensure a sufficient gap for rubber to penetrate.

Further, in the present embodiment, the twisting angle of the sheath strands 11 with respect to the cord axis is preferably 15.0° to 25.0°. The "twisting angle" refers to the angle formed by the helical axis of the strand with respect to the longitudinal direction, which is the extending direction of the circumferential belt cords 10, and is the average value in the longitudinal direction of the circumferential belt cords 10. By setting the twisting angle to 15.0° or more, it is possible to set the elastic modulus E1 at 1.0% strain to the upper limit value (80 GPa) or less. Further, by setting the twisting angle to 25.0° or less, it is possible to stabilize the twisting characteristics.

In the circumferential belt cords 10 of the present embodiment, the material of the filaments (the core filament 12 and the sheath filaments 13 in the present embodiment) is not particularly limited, but it is preferable that the material is, for example, high-carbon steel having a carbon content of 0.80 mass% or more. By using a filament material of high-carbon steel having a carbon content of 0.80 mass% or more, which is of high hardness, it is possible to obtain sufficient cord strength. On the other hand, from the viewpoint of fatigue resistance, it is preferable that the carbon content is 1.5% or less.

In order to set the elastic modulus E1 at 1.0% strain of the circumferential belt cords 10 in the range of 30 GPa to 80 GPa and the elastic modulus E2 at 0.25% strain of the circumferential belt cords 10 in the range of 15 GPa to 60 GPa, for example, adjustment can be made by adopting the following cord structure. That is, in order to adjust the elastic modulus E1 at 1.0% strain of the circumferential belt cords 10 to the above-mentioned relatively low range, as the circumferential belt cords 10, it is possible to use a cord in which a plurality of filaments twisted together to form strands, and the strands are further twisted together, without a core strand. In addition, the filament diameter, number of strands, twisting angle, and the like can be adjusted. Further, the elastic modulus E2 at 0.25% strain of the circumferential belt cords 10 can be determined in accordance with the expansion ratio during tire manufacture, in addition to the above.

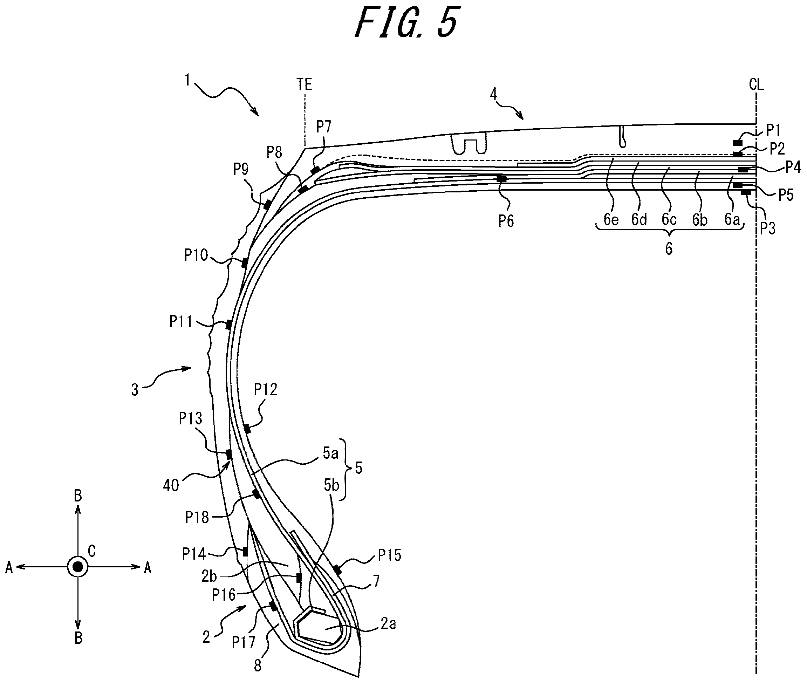

The pneumatic tire according to the present disclosure is not limited to the specific configuration illustrated in the above-described embodiment, and various modifications, changes, and combinations can be made without departing from the scope of the claims. The tire 1 may further include, for example, a communication device 40 such as an RF tag. FIG. 5 is a cross-sectional view in the tire width direction of the tire 1 provided with the communication device 40, and differs from FIG. 1 only in the presence or absence of the communication device 40.

The communication device 40 illustrated in FIG. 5 is embedded at the position indicated by reference sign "P13," that is, in the sidewall portion 3 of the tire 1, but is not limited to this position. The communication device 40 may be embedded at another position in the tire 1. Furthermore, the communication device 40 may be attached to the inner surface facing the tire cavity of the tire 1. Hereinafter, with reference to FIG. 5, examples of positions where the communication device 40 can be disposed in a cross-sectional view in the tire width direction of the tire 1 will be described. In FIG. 5, in addition to the position indicated by reference sign "P13," examples of positions where an RF tag as the communication device 40 can be disposed are indicated by black squares.

The RF tag as the communication device 40 includes an IC chip and an antenna. The RF tag may be disposed sandwiched between positions of a plurality of members, which may be of the same or different types, constituting the tire 1. By doing so, it is easy to attach the RF tag during tire production, and the productivity of the tire 1 provided with the RF tag can be improved. As described above, in the tire 1 illustrated in FIG. 5, the RF tag is disposed sandwiched between the bead filler 2b and the side rubber, which is another member adjacent to the bead filler 2b, within the sidewall portion 3, but may be disposed at another position. The RF tag may be embedded in any member constituting the tire 1. By doing so, as compared to the case where it is disposed sandwiched between a plurality of members constituting the tire 1, the load applied to the RF tag can be reduced. As a result, the durability of the RF tag can be improved. The RF tag may be embedded in a rubber member such as tread rubber or side rubber. It is preferable that the RF tag is not disposed at a position that is a boundary between members having different rigidity in the peripheral length direction, which is a direction along the outer surface of the tire in a cross-sectional view in the tire width direction. By doing so, the RF tag is not disposed at a position where strain is likely to concentrate due to a rigidity step. Therefore, the load applied to the RF tag can be reduced. As a result, the durability of the RF tag can be improved. The number of RF tags is not particularly limited. The tire 1 may be provided with only one RF tag, or may be provided with two or more RF tags. Here, the RF tag is described as an example of the communication device, but a communication device different from the RF tag may be used.

The RF tag may be disposed, for example, in the tread portion 4 of the tire 1. By doing so, the RF tag is not damaged by a side cut of the tire 1. The RF tag may be disposed, for example, on the inner surface of the tread portion 4 of the tire 1 facing the tire cavity (hereinafter, sometimes referred to as the "tire inner surface") (see reference sign "P3" in FIG. 5). The RF tag may be disposed, for example, in the tread central portion in the tire width direction A (see reference signs "P1" to "P6" in FIG. 5). The tread central portion is a position in the tread portion 4 where flexure is less likely to concentrate. By doing so, the load applied to the RF tag can be reduced. As a result, the durability of the RF tag can be improved. Further, it is possible to suppress the occurrence of a difference in communication performance with the RF tag from both outer sides of the tire 1 in the tire width direction A. In this example, the RF tag may be disposed, for example, within a range of 1/2 of the tread width centered on the tire equatorial plane CL in the tire width direction A. The RF tag may be disposed, for example, at the tread edge in the tire width direction A (see reference signs "P7" and "P8" in FIG. 5). When the position of the reader communicating with the RF tag is predetermined, the RF tag may be disposed, for example, at one tread edge closer to the reader. In this example, the RF tag may be disposed, for example, within a range of 1/4 of the tread width with the tread edge TE as the outer end in the tire width direction A.

The RF tag may, for example, be disposed on the tire inner cavity side of the carcass 5, which includes one or more carcass plies spanning between the bead portions 2. By doing so, the RF tag becomes less susceptible to damage from external impacts applied to the tire 1, or from damage such as side cuts or nail punctures. As one example, the RF tag may be disposed in close contact with the surface of the carcass 5 on the tire inner cavity side (see reference sign "P5" in FIG. 5). As another example, when there is another member on the tire inner cavity side of the carcass 5, the RF tag may be disposed, for example, between the carcass 5 and the other member located on the tire inner cavity side of the carcass 5 (see reference sign "P5" in FIG. 5). As an example of another member located on the tire inner cavity side of the carcass 5, an inner liner forming the inner surface of the tire may be mentioned. As another example, the RF tag may be attached to the inner surface of the tire (see reference signs "P3," "P12," and "P15" in FIG. 5). By configuring the RF tag to be attached to the inner surface of the tire, attachment of the RF tag to the tire 1, as well as inspection and replacement of the RF tag, can be easily performed. That is, the attachability and maintainability of the RF tag can be improved. Furthermore, by attaching the RF tag to the inner surface of the tire, compared to a configuration in which the RF tag is embedded inside the tire body, it is possible to prevent the RF tag from becoming a nucleus of tire failure. In addition, when the carcass 5 includes a plurality of carcass plies and there is a position where the plurality of carcass plies are stacked, the RF tag may be disposed between the stacked carcass plies.

The RF tag may, for example, be disposed on the outer side in the tire radial direction B with respect to the belt 6, which includes one or more belt layers 6a to 6e, in the tread portion 4 of the tire 1 (see reference signs "P1" and "P2" in FIG. 5). As one example, the RF tag may be disposed in close contact with the belt 6 on the outer side in the tire radial direction B with respect to the belt 6 (see reference sign "P2" in FIG. 5). As another example, the RF tag may be embedded in the tread rubber on the outer side in the tire radial direction B with respect to the belt 6 (see reference sign "P1" in FIG. 5). By disposing the RF tag in the tread portion 4 of the tire 1 on the outer side in the tire radial direction B with respect to the belt 6, communication with the RF tag from the outside of the tire 1 in the tire radial direction B is less likely to be hindered by the belt 6. Therefore, communication with the RF tag from the outside of the tire 1 in the tire radial direction B can be improved.

Furthermore, the RF tag may, for example, be disposed on the inner side in the tire radial direction B with respect to the belt 6 in the tread portion 4 of the tire 1 (see reference signs "P3," "P5," and "P6" in FIG. 5). By doing so, since the outer side in the tire radial direction B of the RF tag is covered by the belt 6, the RF tag becomes less susceptible to damage from impacts or nail punctures from the tread surface. As one example, the RF tag may be disposed between the belt 6 and the carcass 5 located on the inner side in the tire radial direction B with respect to the belt 6 in the tread portion 4 of the tire 1 (see reference sign "P6" in FIG. 5).

Furthermore, when the belt 6 includes a plurality of belt layers 6a to 6e, the RF tag may be disposed between any two of the belt layers 6a to 6e in the tread portion 4 of the tire 1 (see reference sign "P4" in FIG. 5). By doing so, since the outer side in the tire radial direction B of the RF tag is covered by one or more belt layers 6a to 6e, the RF tag becomes less susceptible to damage from impacts or nail punctures from the tread surface.

The RF tag may, for example, be sandwiched and disposed between the cushion rubber and the tread rubber (see reference sign "P7" in FIG. 5), or between the cushion rubber and the side rubber (see reference sign "P10" in FIG. 5). By doing so, impacts to the RF tag can be mitigated by the cushion rubber. Therefore, the durability of the RF tag can be improved.

Furthermore, the RF tag may, for example, be embedded in the cushion rubber. In addition, the cushion rubber may be composed of a plurality of adjacent rubber members of the same or different types. In such a case, the RF tag may be sandwiched and disposed between the plurality of rubber members constituting the cushion rubber (see reference sign "P8" in FIG. 5).

The RF tag may, for example, be disposed at a position of the bead portion 2 or the sidewall portion 3 of the tire 1. The RF tag may, for example, be disposed in the sidewall portion 3 or the bead portion 2 on one side that is closer to a reader capable of communicating with the RF tag. By doing so, communication between the RF tag and the reader can be enhanced. As one example, the RF tag may be disposed between the carcass 5 and the side rubber, or between the tread rubber and the side rubber.

The RF tag may, for example, be disposed between the position of the tire maximum width in the tire radial direction B and the position of the tread surface (see reference signs "P9," "P10," and "P11" in FIG. 5). By doing so, compared to a configuration in which the RF tag is disposed on the inner side in the tire radial direction B with respect to the position of the tire maximum width, communication with the RF tag from the outside of the tire 1 in the tire radial direction B can be enhanced.

The RF tag may, for example, be disposed on the inner side in the tire radial direction B with respect to the position of the tire maximum width (see reference signs "P12" to "P18" in FIG. 5). By doing so, the RF tag is disposed near the bead portion 2, which has high rigidity. Therefore, the load applied to the RF tag can be reduced. As a result, the durability of the RF tag can be improved. As one example, the RF tag may be disposed at a position adjacent to the bead core 2a in the tire width direction A or the tire radial direction B. The vicinity of the bead core 2a is less likely to concentrate strain. Therefore, the load applied to the RF tag can be reduced. As a result, the durability of the RF tag can be improved.

In particular, it is preferable that the RF tag be disposed on the inner side in the tire radial direction B with respect to the position of the tire maximum width, and on the outer side in the tire radial direction B with respect to the bead core 2a of the bead portion 2 (see reference signs "P12" to "P18" in FIG. 5). By doing so, the durability of the RF tag can be improved, and communication between the RF tag and the reader is less likely to be hindered by the bead core 2a, thereby enhancing the communication performance of the RF tag.

Furthermore, when the side rubber is composed of a plurality of adjacent rubber members of the same or different types in the tire radial direction B, the RF tag may be sandwiched and disposed between the plurality of rubber members constituting the side rubber.

The RF tag may be sandwiched and disposed between the bead filler 2b and a member adjacent to the bead filler 2b (see reference signs "P13" and "P18" in FIG. 5). By doing so, the RF tag can be disposed at a position where strain is less likely to concentrate due to the arrangement of the bead filler 2b. Therefore, the load applied to the RF tag can be reduced. As a result, the durability of the RF tag can be improved. The RF tag may, for example, be sandwiched and disposed between the bead filler 2b and the side rubber (see reference sign "P13" in FIG. 5).

Furthermore, the RF tag may, for example, be sandwiched and disposed between the bead filler 2b and the carcass 5 (see reference sign "P18" in FIG. 5). The portion of the carcass 5 that sandwiches the RF tag together with the bead filler 2b may be located on the outer side in the tire width direction A with respect to the bead filler 2b, or may be located on the inner side in the tire width direction A (see reference sign "P18" in FIG. 5). When the portion of the carcass 5 that sandwiches the RF tag together with the bead filler 2b is located on the outer side in the tire width direction A with respect to the bead filler 2b, the load applied to the RF tag due to impacts or damage from the outside of the tire 1 in the tire width direction A can be further reduced. As a result, the durability of the RF tag can be further improved.

The bead filler 2b may include a portion disposed adjacent to the rubber chafer 8. In such a case, the RF tag may be sandwiched and disposed between the bead filler 2b and the rubber chafer 8.

The bead filler 2b may be composed of a plurality of rubber members having different hardnesses (in the example illustrated in FIG. 5, it is composed of three rubber members). In such a case, the RF tag may be sandwiched and disposed between the plurality of rubber members constituting the bead filler 2b (see reference sign "P16" in FIG. 5).

The RF tag may, for example, be sandwiched and disposed between the rubber chafer 8 and the side rubber (see reference sign "P14" in FIG. 5). By doing so, the RF tag can be disposed at a position where strain is less likely to concentrate due to the arrangement of the rubber chafer 8. Therefore, the load applied to the RF tag can be reduced. As a result, the durability of the RF tag can be improved.

The RF tag may be sandwiched and disposed between the wire chafer 7 and another member adjacent to the wire chafer 7 on the inner or outer side in the tire width direction A (see reference sign "P17" in FIG. 5). By doing so, the position of the RF tag is less likely to fluctuate during tire deformation. Therefore, the load applied to the RF tag during tire deformation can be reduced. As a result, the durability of the RF tag can be improved. The other member adjacent to the wire chafer 7 on the inner or outer side in the tire width direction A may, for example, be a rubber member such as the rubber chafer 8 (see reference sign "P17" in FIG. 5). Furthermore, the other member adjacent to the wire chafer 7 on the inner or outer side in the tire width direction A may, for example, be the carcass 5.

[Contribution to the Sustainable Development Goals (SDGs) led by the United Nations]

The SDGs have been advocated for the realization of a sustainable society. One embodiment of the present disclosure is considered to be a technology that can contribute to, for example, "No. 7 Energy for All and Clean Energy," "No. 12 Responsible Consumption and Production," and "No. 13 Climate Action."

### INDUSTRIAL APPLICABILITY

The present disclosure relates to a pneumatic tire.

### REFERENCE SIGNS LIST

1: pneumatic tire, 2: bead portion, 2a: bead core, 2b: bead filler, 3: sidewall portion, 4: tread portion, 5: carcass, 5a: carcass main body portion, 5b: carcass wound portion, 6: belt, 6a: base belt layer, 6a1: base belt cord, 6b: circumferential belt layer, 6c, 6d: inclined belt layer, 6c1, 6d1: inclined belt cord, 6e: protective belt layer, 6el: protective belt cord, 7: wire chafer, 8: rubber chafer, 10: circumferential belt cord, 11: sheath strand, 12: core filament, 13: sheath filament, 40: communication device, A: tire width direction, B: tire radial direction, C: tire circumferential direction, CL: tire equatorial plane, D1: cord diameter, D2: filament diameter, D2a: core filament diameter, D2b: sheath filament diameter, TE: tread edge, W1: width of base belt layer, W2: width of circumferential belt layer, W3: width of inclined belt layer on the inner side in the tire radial direction, W4: width of inclined belt layer on the outer side in the tire radial direction, W5: width of protective belt layer, θa: inclination angle of base belt cord, θc, θd: inclination angle of inclined belt cord, θe: inclination angle of protective belt cord

## Claims

1. A pneumatic tire comprising five belt layers in total, wherein the five belt layers comprise:
two inclined belt layers including inclined belt cords extending at an inclination angle greater than 5° with respect to the tire circumferential direction and inclined in opposite directions to each other;
a circumferential belt layer including circumferential belt cords extending in a direction of 0° to 5° with respect to the tire circumferential direction, and disposed adjacent in the tire radial direction to at least one of the two inclined belt layers;
a protective belt layer disposed on the outer side in the tire radial direction with respect to the two inclined belt layers and the circumferential belt layer, the protective belt layer including protective belt cords extending at an inclination angle greater than that of the inclined belt cords with respect to the tire circumferential direction;
and a base belt layer disposed on the inner side in the tire radial direction with respect to the two inclined belt layers and the circumferential belt layer, the base belt layer including base belt cords extending at an inclination angle greater than that of the inclined belt cords with respect to the tire circumferential direction,
wherein an elastic modulus at 1.0% strain of the circumferential belt cords is 30 GPa to 80 GPa.

2. The pneumatic tire according to claim 1, wherein a width in the tire width direction of the base belt layer is less than 50 % of a width in the tire width direction of the circumferential belt layer.

3. The pneumatic tire according to claim 1 or 2, wherein the protective belt cords of the protective belt layer and the base belt cords of the base belt layer are inclined in opposite directions to each other, with respect to the tire circumferential direction.

4. The pneumatic tire according to claim 3, wherein the inclination angle with respect to the tire circumferential direction of the protective belt cords of the protective belt layer and the inclination angle with respect to the tire circumferential direction of the base belt cords of the base belt layer are substantially equal.

5. The pneumatic tire according to claim 3, wherein the base belt cords of the base belt layer and the inclined belt cords of the inclined belt layer located on the inner side in the tire radial direction among the two inclined belt layers are each inclined in the same direction with respect to the tire circumferential direction.

6. The pneumatic tire according to claim 3, wherein the protective belt cords of the protective belt layer and the inclined belt cords of the inclined belt layer located on the outer side in the tire radial direction among the two inclined belt layers are each inclined in the same direction with respect to the tire circumferential direction.

7. The pneumatic tire according to claim 1 or 2, wherein the inclined belt cords of each of the two inclined belt layers are inclined at an inclination angle of 15° to 50° with respect to the tire circumferential direction.

8. The pneumatic tire according to claim 1 or 2, wherein the width in the tire width direction of the circumferential belt layer is narrower than the maximum width in the tire width direction of the two inclined belt layers.

9. The pneumatic tire according to claim 1 or 2, wherein a ratio E1/E2 of an elastic modulus E1 at 1.0% strain to an elastic modulus E2 at 0.25% strain of the circumferential belt cords is 1.1 to 3.0.

10. The pneumatic tire according to claim 1 or 2, wherein an elastic modulus E2 at 0.25% strain of the circumferential belt cords is 15 GPa to 60 GPa.

11. The pneumatic tire according to claim 1 or 2, wherein the circumferential belt cords have a multiple-twisted structure in which strands formed by twisting a plurality of filaments are further twisted together.
